# EUROPEAN PATENT SPECIFICATION

(11) **EP 3 049 661 B1**
(45) Date of publication and mention of the grant of the patent: **23.08.2017**
(21) Application number: 13780176.7
(22) Date of filing: 25.09.2013
(51) Int. Cl.: F02D 41/30, F02D 41/40, F02D 41/00, F02D 19/06, F02D 19/10

(54) **METHOD FOR OPERATING PISTON ENGINE AND PISTON ENGINE**
VERFAHREN ZUM BETRIEB EINES KOLBENMOTORS UND KOLBENMOTOR
PROCÉDÉ PERMETTANT DE FAIRE FONCTIONNER UN MOTEUR À PISTON ET MOTEUR À PISTON

(43) Date of publication of application: 03.08.2016
(73) Proprietor: Wärtsilä Finland Oy, 65380 Vaasa (FI)
(72) Inventor: NYLUND, Ingemar, FI-66580 Kuni (FI); DANBRATT, Johan, S-41767 Göteborg (SE); HARALDSON, Lennart, S-42931 Kullavik (SE)
(74) Representative: Berggren Oy, Helsinki & Oulu
(86) International application number: PCT/FI2013/050932
(87) International publication number: WO 2015/044501

(56) References cited:
- WO-A1-01/59280
- WO-A2-2011/154592
- US-A- 5 365 902
- US-B1- 6 202 601

## Description

### Technical field of the invention

The present invention relates to a method for operating a piston engine in accordance with the preamble of claim 1, as disclosed e.g. in document WO01/59280A1. The invention also concerns a piston engine as defined in the preamble of the other independent claim.

### Background of the invention

Cetane number is a measure of a fuel's ignition delay, i.e. the period of time between the start of the injection and the ignition of the fuel. Higher cetane number means shorter ignition delay. When fuels with low cetane number, such as natural gas and methanol are used in a piston engine, some kind of ignition aid is needed for igniting the fuel. In many large internal combustion engines, such as in ship or power plant engines, fuel with a low cetane number (main fuel) is ignited by injecting liquid pilot fuel, which has a higher cetane number, into the cylinders. The pilot fuel is injected into the cylinders near the top dead center. Combustion of the pilot fuel then initiates the combustion of the main fuel. The main fuel is usually introduced into the cylinders in good time before the ignition, for instance by injecting the fuel into the intake duct, in order to allow the fuel to be mixed with the intake air. Premixed combustion (Otto combustion process) is thus used. A problem of premixed combustion is that at high loads there is a risk of knocking, i.e. premature ignition of the main fuel. One way to solve the knocking problem is to use diesel combustion process instead of the premixed combustion. In the diesel combustion process, the main fuel is injected into the cylinders near the top dead center after the pilot fuel injection. However, the use of the diesel combustion process has the drawback that more NOx emissions are generated compared to the premixed combustion.

### Summary of the invention

An object of the present invention is to provide an improved method for operating a piston engine. Another object of the invention is to provide an improved piston engine. The engine is operable in a first operating mode, in which operating mode a main fuel is introduced into the cylinders after pilot fuel injection into the cylinders of the engine has started, and in a second operating mode, in which operating mode the main fuel is introduced into the cylinders before the pilot fuel is injected into the cylinders. The characterizing features of the method according to the invention are given in the characterizing part of claim 1. The characterizing features of the piston engine are given in the characterizing part of the other independent claim.

The method according to the invention comprises the steps of introducing main fuel having a first cetane number into the cylinders of the engine, injecting pilot fuel having a second cetane number into the cylinders of the engine, the second cetane number being higher than the first cetane number, igniting the pilot fuel by auto-ignition, and igniting the main fuel by the combustion of the pilot fuel. One or more indicators of auto-ignition and/or a risk of auto-ignition of the main fuel are monitored, the value of at least one monitored indicator is compared to a predetermined range, within which range auto-ignition of the main fuel occurs or a non-acceptable risk of the auto-ignition of the main fuel exists, and if one or more of the monitored indicators is within the predetermined range, the engine is operated in the first operating mode, and if none of the monitored values is within the predetermined range, the engine is operated in the second operating mode.

The piston engine according to the invention comprises means for introducing main fuel having a first cetane number into the cylinders of the engine, and means for injecting pilot fuel having a second cetane number into the cylinders of the engine, the second cetane number being higher than the first cetane number. The engine comprises a control unit, which is configured to receive data concerning one or more indicators of auto-ignition and/or a risk of auto-ignition of the main fuel, compare the value of at least one monitored indicator to a predetermined range, within which range auto-ignition of the main fuel occurs or a non-acceptable risk of the auto-ignition of the main fuel exists, and if one or more of the monitored indicators is within the predetermined range, to operate the engine in the first operating mode, and if none of the monitored values is within the predetermined range, operate the engine in the second operating mode.

With the method and the engine according to the invention, low NOx emissions can be achieved at low loads, whereas at high loads knocking problems can be avoided and good load acceptance is achieved. Compared to engines running with premixed combustion at all loads, a higher compression ratio can be used, which improves the efficiency of the engine.

The cetane number of the main fuel can be, for instance, below 20, whereas the cetane number of the pilot fuel is preferably at least 30.

As an indicator of the auto-ignition of the main fuel or a risk of auto-ignition can be used, for instance, engine load, cylinder pressure or cylinder temperature at a certain predetermined crank angle, or engine noise.

The pilot fuel is preferably liquid fuel, such as light fuel oil or marine diesel oil. The main fuel can be either liquid fuel, such as methanol, or gaseous fuel, for instance fuel that contains methane.

According to an embodiment of the invention, when the engine is operated in the second operating mode using gaseous main fuel, the main fuel is introduced into the cylinders of the engine at a temperature exceeding the boiling point of the gas but being less than 40 °C above the boiling point of the gas. When the temperature of the main fuel is kept close to the boiling point, the fuel-air mixture is cooled down and knocking can be avoided when the premixed combustion is used.

### Brief description of the drawings

Embodiments of the invention are described below in more detail with reference to the accompanying drawing, which shows schematically part of a fuel injection system of a piston engine.

### Description of embodiments of the invention

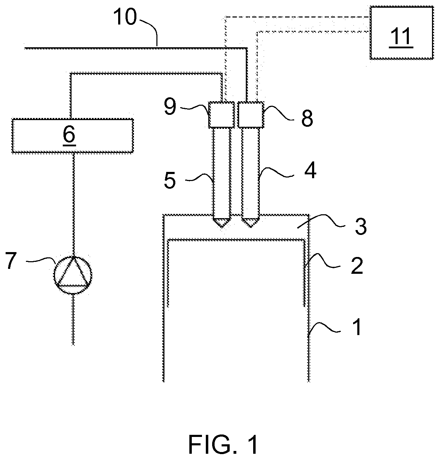

In figure 1 is shown schematically a simplified view of a fuel injection system of a piston engine. The engine is a large internal combustion engine, such as a main or an auxiliary engine of a ship or an engine that is used at a power plant for producing electricity. The engine comprises a plurality of cylinders 1, of which only one is shown. A reciprocating piston 2 is arranged in each cylinder 1 of the engine. The engine is capable of being operated on a fuel having a low cetane number. Cetane number is a measure of a fuel's ignition delay, i.e. the period of time between the start of the injection and the ignition of the fuel. Higher cetane number means shorter ignition delay. The cetane number of the fuel having a low cetane number can be, for instance, below 20. The low cetane number fuel can be either liquid fuel, such as methanol, or gaseous fuel, such as natural gas, biogas or other methane containing gas. When a low cetane number fuel is used as the main fuel, a pilot fuel is used for igniting the main fuel. The pilot fuel has a higher cetane number than the main fuel. The cetane number of the pilot fuel is at least 30, preferably at least 40. The pilot fuel is preferably liquid fuel. Suitable pilot fuels are, for instance, light fuel oil (LFO) or marine diesel oil (MDO).

For introducing the main fuel into the cylinders 1 of the engine, each cylinder 1 of the engine is provided with a main fuel injector 4. In the embodiment of figure 1, the main fuel is gaseous fuel, and the main fuel injector 4 is thus a gas injector. The main fuel injector 4 is arranged to introduce the main fuel directly into the combustion chamber 3 of the cylinder 1. The opening of the main fuel injector 4 is controlled by an actuator 8, which can be, for instance, an electrical, hydraulic or pneumatic actuator. In the embodiment of figure 1, the main fuel injector 4 is connected to a gas supply line 10. If the main fuel was liquid fuel instead of gaseous fuel, the main fuel injector 4 could be connected to a fuel rail, or each cylinder of the engine could be provided with an individual pressure accumulator for storing pressurized fuel, and the main fuel injector would be connected to the pressure accumulator. Instead of a single main fuel injector 4, which is arranged to inject the main fuel directly into the combustion chamber 3, each cylinder 1 of the engine can be provided with an additional main fuel injector, which is arranged to inject fuel into the intake duct.

For introducing the pilot fuel into the cylinders 1, each cylinder 1 of the engine is provided with a pilot fuel injector 5. The pilot fuel injector 5 is arranged to inject the pilot fuel directly into the combustion chamber 3 of the cylinder 1. The opening of the pilot fuel injector 5 is controlled by an actuator 9, which can be, for instance, an electrical, hydraulic or pneumatic actuator. The pilot fuel injector 5 is connected to a fuel rail 6. Alternatively, each cylinder 1 of the engine could be provided with an individual pressure accumulator for storing the pressurized pilot fuel, in which case the pilot fuel injector 5 would be connected to the pressure accumulator. Instead of a common rail system, the pilot fuel could be injected into the cylinders 1 by using conventional fuel injection pumps, in which case each cylinder 1 of the engine would be provided with a fuel injection pump. The pilot fuel system can comprise several fuel rails, for instance one fuel rail for each bank of a V-engine. The pilot fuel is supplied at a high pressure into the fuel rail 6 by a high-pressure pump 7. The pilot fuel system can be provided with more than one high-pressure pumps 7. The pilot fuel system is also provided with one or more low-pressure pumps (not shown) for supplying fuel to the high-pressure pumps 7.

The engine can be operated at least in a first operating mode and in a second operating mode. In the first operating mode, a diesel combustion process is used. The main fuel is thus introduced into the cylinders 1 after the pilot fuel injection into the cylinders 1 has started. In the second operating mode, a premixed combustion process is used. The main fuel is thus introduced into the cylinders 1 before the pilot fuel is injected into the cylinders 1. Because of the higher cetane number of the pilot fuel, the pilot fuel is auto-ignited when the temperature in the combustion chamber 3 increases due to the compression by the piston 2. The combustion of the pilot fuel then initiates the combustion of the main fuel.

The selection of the operating mode of the engine is based on detected or assumed knocking or a risk of knocking. When auto-ignition of the main fuel occurs or there is a high risk of it, the first operating mode is used. When there is no risk of knocking, the second operating mode can be used for achieving lower NOx emissions.

The engine comprises a control unit 11, which is configured to receive data concerning one or more indicators of auto-ignition and/or a risk of auto-ignition of the main fuel. For each monitored indicator, a certain range is determined, within which range auto-ignition of the main fuel occurs or a non-acceptable risk of the auto-ignition of the main fuel exists. The control unit 11 compares each monitored indicator to the corresponding predetermined range, and selects the operating mode of the engine accordingly. If one or more of the monitored indicators is within the predetermined range, the control unit 11 operates the engine in the first operating mode. Otherwise, the engine is operated in the second operating mode. In practice, the operating mode is selected by suitable timing of the actuators 8, 9 of the main fuel injector 4 and the pilot fuel injector 5. The fuel injection timings of the pilot fuel and the main fuel are thus controlled for selecting either a premixed combustion or diesel combustion. If the engine comprises additional main fuel injectors, the main fuel can be introduced through the additional main fuel injectors into the intake duct when the premixed combustion is used. When the diesel combustion is used, the main fuel is introduced directly into the combustion chambers 3.

Different indicators can be used for determining whether auto-ignition of the main fuel is occurring or whether there is a risk of the auto-ignition of the main fuel. The indicators can be measured values or based on the operating parameters of the engine. The engine can comprise different sensors for monitoring the desired indicators. The risk of auto-ignition of the main fuel is higher at high engine load, and the engine load can thus be used as an indicator of a risk of the auto-ignition of the main fuel. When the engine load is below a predetermined value, the engine is operated in the second operating mode. This helps to reduce NOx emissions. When the engine load is above the predetermined value, the engine is operated in the first operating mode. Auto-ignition of the main fuel can thus be avoided. The engine load at which the operating mode is changed depends on several factors, such as the design of the engine and the used fuel. The use of engine load as a criterion for the selection of the operating mode is simple and does not require any specific instrumentation. Possible indicators of already occurring auto-ignition are, for instance, cylinder pressure or cylinder temperature at a predetermined crank angle or engine noise. When the cylinder pressure or cylinder temperature at a certain crank angle during the compression stroke exceeds a predetermined threshold value, the control unit 11 can determine that the engine is knocking and switch to the first operating mode. The different indicators can be used either alone or in combination to select the operating mode. Suitable threshold values for the indicators depend on several factors, such as the design of the engine and the used fuel.

According to an embodiment of the invention, when the engine is using gaseous fuel and it is operated in the second operating mode, the main fuel is introduced into the cylinders 1 of the engine at a temperature that is as close as possible to the boiling point of the fuel. The temperature of the gas should be above the boiling point but less than 40 °C above the boiling point of the gas. The low temperature of the gas cools down the fuel-air mixture and helps to avoid knocking when the premixed combustion process is used.

It will be appreciated by a person skilled in the art that the invention is not limited to the embodiments described above, but may vary within the scope of the appended claims.

## Claims

1. A method for operating a piston engine, the method comprising the steps of
- introducing main fuel having a first cetane number into the cylinders (1) of the engine,
- injecting pilot fuel having a second cetane number into the cylinders (1) of the engine, the second cetane number being higher than the first cetane number,
- igniting the pilot fuel by auto-ignition, and
- igniting the main fuel by the combustion of the pilot fuel,
the engine being operable in a first operating mode, in which operating mode the main fuel is introduced into the cylinders (1) after the pilot fuel injection into the cylinders (1) has started, and in a second operating mode, in which operating mode the main fuel is introduced into the cylinders (1) before the pilot fuel is injected into the cylinders (1),
**characterized in that**
- one or more indicators of auto-ignition and/or a risk of auto-ignition of the main fuel are monitored,
- the value of at least one monitored indicator is compared to a predetermined range, within which range auto-ignition of the main fuel occurs or a non-acceptable risk of the auto-ignition of the main fuel exists, and
- if one or more of the monitored indicators is within the predetermined range, the engine is operated in the first operating mode, and if none of the monitored values is within the predetermined range, the engine is operated in the second operating mode.

2. A method according to claim 1, **characterized in that** engine load is used as an indicator of a risk of auto-ignition of the main fuel.

3. A method according to claim 1 or 2, **characterized in that** cylinder pressure at a predetermined crank angle is used as an indicator of the auto-ignition of the main fuel.

4. A method according to any of claims 1-3, **characterized in that** cylinder temperature at a predetermined crank angle is used as an indicator of the auto-ignition of the main fuel.

5. A method according to any of the preceding claims, **characterized in that** engine noise is used as an indicator of the auto-ignition of the main fuel.

6. A method according to any of the preceding claims, **characterized in that** the first cetane number is less than 20.

7. A method according to any of the preceding claims, **characterized in that** the second cetane number is at least 30.

8. A method according to any of the preceding claims, **characterized in that** the pilot fuel is liquid.

9. A method according to claim 8, **characterized in that** the pilot fuel is light fuel oil or marine diesel oil.

10. A method according to any of the preceding claims, **characterized in that** the main fuel is gaseous.

11. A method according to claim 10, **characterized in that** the main fuel contains methane.

12. A method according to claim 10 or 11, **characterized in that** when the engine is operated in the second operating mode, the main fuel is introduced into the cylinders of the engine at a temperature exceeding the boiling point of the gas but being less than 40 °C above the boiling point of the gas.

13. A method according to any of claims 1-9, **characterized in that** the main fuel is methanol.

14. A piston engine comprising
- means (4, 8, 10) for introducing main fuel having a first cetane number into the cylinders of the engine, and
- means (5, 6, 7, 9) for injecting pilot fuel having a second cetane number into the cylinders (1) of the engine, the second cetane number being higher than the first cetane number,
the engine being operable in a first operating mode, in which operating mode the main fuel is introduced into the cylinders (1) after the pilot fuel injection into the cylinders (1) has started, and in a second operating mode, in which operating mode the main fuel is introduced into the cylinders (1) before the pilot fuel is injected into the cylinders (1), **characterized in that** the engine comprises a control unit (11), which is configured to
- receive data concerning one or more indicators of auto-ignition and/or a risk of auto-ignition of the main fuel,
- compare the value of at least one monitored indicator to a predetermined range, within which range auto-ignition of the main fuel occurs or a non-acceptable risk of the auto-ignition of the main fuel exists, and
- if one or more of the monitored indicators is within the predetermined range, operate the engine in the first operating mode, and if none of the monitored values is within the predetermined range, operate the engine in the second operating mode.

## Patentansprüche

1. Verfahren zum Betrieb eines Kolbenmotors, wobei das Verfahren die folgenden Schritte umfasst:
- Einführen von Hauptkraftstoff mit einer ersten Cetanzahl in die Zylinder (1) des Motors,
- Einspritzen von Zündkraftstoff mit einer zweiten Cetanzahl in die Zylinder (1) des Motors, wobei die zweite Cetanzahl höher als die erste Cetanzahl ist,
- Zünden des Zündkraftstoffs durch Selbstzündung und
- Zünden des Hauptkraftstoffs durch die Verbrennung des Zündkraftstoffs,
wobei der Motor in einer ersten Betriebsart, in welcher Betriebsart der Hauptkraftstoff in die Zylinder (1) eingeführt wird nach dem Start der Einspritzung des Zündkraftstoffs in die Zylinder (1), und in einer zweiten Betriebsart, in welcher Betriebsart der Hauptkraftstoff in die Zylinder (1) eingespritzt wird bevor der Zündkraftstoff in die Zylinder (1) eingeführt wird, betreibbar ist,
**dadurch gekennzeichnet, dass**
- einer oder mehrere Indikatoren einer Selbstzündung und/oder eines Risikos der Selbstzündung des Hauptkraftstoffs überwacht werden,
- der Wert mindestens eines überwachten Indikators mit einem vorgegebenen Bereich verglichen wird, innerhalb welchem Bereich eine Selbstzündung des Hauptkraftstoffs auftritt oder ein nicht akzeptables Risiko der Selbstzündung des Hauptkraftstoffs besteht, und
- wenn einer oder mehrere der überwachten Indikatoren innerhalb des vorgegebenen Bereichs liegen, der Motor in der ersten Betriebsart betrieben wird, und wenn keiner der überwachten Werte innerhalb des vorgegebenen Bereichs liegen, der Motor in der zweiten Betriebsart betrieben wird.

2. Verfahren nach Anspruch 1, **dadurch gekennzeichnet, dass** die Motorlast als ein Indikator eines Risikos der Selbstzündung des Hauptkraftstoffs verwendet wird.

3. Verfahren nach Anspruch 1 oder 2, **dadurch gekennzeichnet, dass** der Zylinderdruck bei einem vorgegebenen Kurbelwinkel als ein Indikator der Selbstzündung des Hauptkraftstoffs verwendet wird.

4. Verfahren nach einem der Ansprüche 1-3, **dadurch gekennzeichnet, dass** die Temperatur bei einem vorgegebenen Kurbelwinkel als ein Indikator der Selbstzündung des Hauptkraftstoffs verwendet wird.

5. Verfahren nach einem der vorhergehenden Ansprüche, **dadurch gekennzeichnet, dass** Motorgeräusche als ein Indikator der Selbstzündung des Hauptkraftstoffs verwendet werden.

6. Verfahren nach einem der vorhergehenden Ansprüche, **dadurch gekennzeichnet, dass** die erste Cetanzahl kleiner als 20 ist.

7. Verfahren nach einem der vorhergehenden Ansprüche, **dadurch gekennzeichnet, dass** die zweite Cetanzahl mindestens 30 beträgt.

8. Verfahren nach einem der vorhergehenden Ansprüche, **dadurch gekennzeichnet, dass** der Zündkraftstoff flüssig ist.

9. Verfahren nach Anspruch 8, **dadurch gekennzeichnet, dass** der Zündkraftstoff leichtes Heizöl oder Schiffsdieselöl ist.

10. Verfahren nach einem der vorhergehenden Ansprüche, **dadurch gekennzeichnet, dass** der Hauptkraftstoff gasförmig ist.

11. Verfahren nach Anspruch 10, **dadurch gekennzeichnet, dass** der Hauptkraftstoff Methan enthält.

12. Verfahren nach Anspruch 10 oder 11, **dadurch gekennzeichnet, dass** beim Betrieb des Motors in der zweiten Betriebsart der Hauptkraftstoff bei einer Temperatur, die den Siedepunkt des Gases übersteigt, jedoch kleiner als 40° C über dem Siedepunkt des Gases ist, in die Zylinder des Motors eingeführt wird.

13. Verfahren nach einem der Ansprüche 1-9, **dadurch gekennzeichnet, dass** der Hauptkraftstoff Methanol ist.

14. Kolbenmotor, umfassend:
- Mittel (4, 8, 10) zum Einführen von Hauptkraftstoff mit einer ersten Cetanzahl in die Zylinder des Motors, und
- Mittel (5, 6, 7, 9) zum Einspritzen von Zündkraftstoff mit einer zweiten Cetanzahl in die Zylinder (1) des Motors, wobei die zweite Cetanzahl höher als die erste Cetanzahl ist,
wobei der Motor in einer ersten Betriebsart, in welcher Betriebsart der Hauptkraftstoff in die Zylinder (1) eingeführt wird nach dem Start der Einspritzung des Zündkraftstoffs in die Zylinder (1), und in einer zweiten Betriebsart, in welcher Betriebsart der Hauptkraftstoff in die Zylinder (1) eingespritzt wird bevor der Zündkraftstoff in die Zylinder (1) eingeführt wird, betreibbar ist,
**dadurch gekennzeichnet, dass** der Motor eine Steuereinheit (11) umfasst, die so konfiguriert zum
- Empfangen von Daten über einen oder mehrere Indikatoren der Selbstzündung und/oder eines Risikos einer Selbstzündung des Hauptkraftstoffs,
- Vergleichen des Wertes von mindestens einem überwachten Indikator mit einem vorgegebenen Bereich, innerhalb welchem Bereich eine Selbstzündung des Hauptkraftstoffs auftritt oder ein nicht akzeptables Risiko der Selbstzündung des Hauptkraftstoffs besteht, und
- wenn einer oder mehrere der überwachten Indikatoren innerhalb des vorgegebenen Bereichs liegen, Betreiben des Motors in der ersten Betriebsart, und wenn keiner der überwachten Werte innerhalb des vorgegebenen Bereichs liegen, Betreiben des Motors in der zweiten Betriebsart.

## Revendications

1. Procédé permettant de faire fonctionner un moteur à piston, ce procédé comprenant les étapes suivantes:
- introduction d'un carburant principal doté d'un premier indice de cétane dans les cylindres (1) du moteur,
- injection de carburant pilote doté d'un second indice de cétane dans les cylindres (1) du moteur, le second indice de cétane étant un supérieur au premier indice de cétane,
- allumage du carburant pilote par auto-allumage, et
- allumage du carburant principal par la combustion du carburant pilote,
le moteur pouvant fonctionner dans un premier mode de fonctionnement, dans lequel mode de fonctionnement le carburant principal est introduit dans les cylindres (1) une fois que l'injection de carburant pilote dans les cylindres (1) a commencé, et un second mode de fonctionnement, dans lequel mode de fonctionnement le carburant principal est introduit dans les cylindres (1) avant que le carburant pilote ne soit injecté dans les cylindres (1),
**caractérisé en ce que**
- un ou plusieurs indicateurs d'auto-allumage et/ou un risque d'auto-allumage sont contrôlés,
- la valeur d'au moins un indicateur contrôlé est comparée à une plage prédéterminée, dans laquelle plage l'auto-allumage du carburant principal se produit ou un risque non acceptable d'auto-allumage du carburant principal existe et,
- si un ou plusieurs des indicateurs contrôlés se trouvent dans la plage prédéterminée, le moteur fonctionne dans le premier mode de fonctionnement et, si aucune des valeurs contrôlées ne se trouve dans la plage prédéterminée, le moteur fonctionne dans le second mode de fonctionnement.

2. Procédé selon la revendication 1, **caractérisé en ce que** la charge du moteur est utilisée comme indicateur de risque d'auto-allumage du carburant principal.

3. Procédé selon la revendication 1 ou 2, **caractérisé en ce que** la pression du cylindre à un angle prédéterminé de vilebrequin est utilisée comme indicateur de l'auto-allumage du carburant principal.

4. Procédé selon l'une quelconque des revendications 1 - 3, **caractérisé en ce que** la température du cylindre à un angle prédéterminé de vilebrequin est utilisée comme indicateur de l'auto-allumage du carburant principal.

5. Procédé selon l'une quelconque des revendications précédentes, **caractérisé en ce que** le bruit du moteur est utilisé comme indicateur de l'auto-allumage du carburant principal.

6. Procédé selon l'une quelconque des revendications précédentes, **caractérisé en ce que** le premier indice de cétane est inférieur à 20.

7. Procédé selon l'une quelconque des revendications précédentes, **caractérisé en ce que** le second indice de cétane est d'au moins 30.

8. Procédé selon l'une quelconque des revendications précédentes, **caractérisé en ce que** le carburant pilote est liquide.

9. Procédé selon la revendication 8, **caractérisé en ce que** le carburant pilote est du fioul léger ou du gazole marin.

10. Procédé selon l'une quelconque des revendications précédentes, **caractérisé en ce que** le carburant principal est gazeux.

11. Procédé selon la revendication 10, **caractérisé en ce que** le carburant principal contient du méthane.

12. Procédé selon la revendication 10 ou 11, **caractérisé en ce que**, lorsque le moteur fonctionne dans le second mode de fonctionnement, le carburant principal est introduit dans les cylindres du moteur à une température dépassant le point d'ébullition du gaz mais non inférieure à 40 °C au-dessus du point d'ébullition du gaz.

13. Procédé selon l'une quelconque des revendications 1 - 9, **caractérisé en ce que** le carburant principal est du méthanol.

14. Moteur à piston comprenant
- un moyen (4, 8, 10) pour introduire du carburant principal doté d'un premier indice de cétane dans les cylindres du moteur, et
- un moyen (5, 6, 7, 9) pour injecter du carburant pilote doté d'un second indice de cétane dans les cylindres (1) du moteur, le second indice de cétane étant supérieur au premier indice de cétane,
le moteur pouvant fonctionner dans un premier mode de fonctionnement, dans lequel mode de fonctionnement le carburant principal est introduit dans les cylindres (1) une fois que l'injection de carburant pilote dans les cylindres (1) a commencé, et dans un second mode de fonctionnement, dans lequel mode de fonctionnement le carburant principal est introduit dans les cylindres (1) avant que le carburant pilote ne soit injecté dans les cylindres (1),
**caractérisé en ce que** le moteur comprend une unité de commande (11) qui est conçue pour
- recevoir des données concernant plusieurs indicateurs d'auto-allumage et/ou un risque d'auto-allumage du carburant principal,
- comparer la valeur d'au moins un indicateur contrôlé avec une plage prédéterminée, dans laquelle plage l'allumage du principal se produit ou un risque non acceptable d'auto-allumage du carburant principal existe, et,
- si un ou plusieurs des indicateurs contrôlés se trouvent dans la plage prédéterminée, faire fonctionner le moteur dans le premier mode de fonctionnement et, si aucune des valeurs contrôlées ne se trouve dans la plage prédéterminée, faire fonctionner le moteur dans le second mode de fonctionnement.
